(19) Europäisches Patentamt
European Patent Office
Office européen des brevets

(11) **EP 3 084 602 B1**

(12) **FASCICULE DE BREVET EUROPEEN**

(45) Date de publication et mention
de la délivrance du brevet:
**14.07.2021 Bulletin 2021/28**

(21) Numéro de dépôt: **14814968.5**

(22) Date de dépôt: **27.11.2014**

(51) Int Cl.:
***G06F 9/48*** *(2006.01)*

(86) Numéro de dépôt international:
**PCT/FR2014/053055**

(87) Numéro de publication internationale:
**WO 2015/092188 (25.06.2015 Gazette 2015/25)**

(54) **PROCEDE DE COMPOSITION ET D'EXECUTION D'UN PLAN DE SEQUENCEMENT DE TACHES TEMPS-REEL**

VERFAHREN ZUM ZUSAMMENSTELLEN UND AUSFÜHREN EINES ECHTZEIT-AUFGABENABFOLGEPLANS

METHOD FOR COMPOSING AND EXECUTING A REAL-TIME TASK-SEQUENCING PLAN

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.12.2013 FR 1362893**

(43) Date de publication de la demande:
**26.10.2016 Bulletin 2016/43**

(73) Titulaire: **Krono - Safe**
**91400 Orsay (FR)**

(72) Inventeurs:
• **DAVID, Vincent**
**F-91460 Marcoussis (FR)**
• **BARBOT, Adrien**
**F-91400 Orsay (FR)**

(74) Mandataire: **de Jong, Jean Jacques et al**
**Omnipat**
**24, place des Martyrs de la Résistance**
**13100 Aix en Provence (FR)**

(56) Documents cités:
**FR-A1- 2 949 876**

• **JIA XU ET AL: "SCHEDULING PROCESSES WITH RELEASE TIMES, DEADLINES, PRECEDENCE, AND EXCLUSION RELATIONS", IEEE TRANSACTIONS ON SOFTWARE ENGINEERING, IEEE SERVICE CENTER, LOS ALAMITOS, CA, US, vol. 16, no. 3, mars 1990 (1990-03), pages 360-369, XP000103568, ISSN: 0098-5589, DOI: 10.1109/32.48943**
• **BARUAH S: "The Limited-Preemption Uniprocessor Scheduling of Sporadic Task Systems", REAL-TIME SYSTEMS, 2005. (ECRTS 2005). PROCEEDINGS. 17TH EUROMICRO CON FERENCE ON PALMA DE MALLORCA, BALEARIC ISLANDS, SPAIN 06-08 JULY 2005, PISCATAWAY, NJ, USA,IEEE, 6 juillet 2005 (2005-07-06), pages 137-144, XP010835774, ISBN: 978-0-7695-2400-9**
• **AUSSAGUES C ET AL: "A method and a technique to model and ensure timeliness in safety critical real-time systems", ENGINEERING OF COMPLEX COMPUTER SYSTEMS, 1998. ICECCS '98. PROCEEDINGS . FOURTH IEEE INTERNATIONAL CONFERENCE ON MONTEREY, CA, USA 10-14 AUG. 1998, LOS ALAMITOS, CA, USA,IEEE COMPUT. SOC, US, 10 août 1998 (1998-08-10), pages 2-12, XP010297241, DOI: 10.1109/ICECCS.1998.706651 ISBN: 978-0-8186-8597-2**

- KHIL A ET AL: "NON-PREEMPTIVE SCHEDULING OF REAL-TIME PERIODIC TASKS WITH SPECIFIED RELEASE TIMES", IEICE TRANSACTIONS ON INFORMATION AND SYSTEMS, INFORMATION & SYSTEMS SOCIETY, TOKYO, JP, vol. E80-D, no. 5, mai 1997 (1997-05), pages 562-572, XP000701955, ISSN: 0916-8532
- COTTET F ET AL: "Off-line temporal analysis of hard real-time applications", REAL-TIME APPLICATIONS, 1994., PROCEEDINGS OF THE IEEE WORKSHOP ON WASHINGTON, DC, USA 21-22 JULY 1994, LOS ALAMITOS, CA, USA, IEEE COMPUT. SOC, 21 juillet 1994 (1994-07-21), pages 28-32, XP010099957, DOI: 10.1109/RTA.1994.316137 ISBN: 978-0-8186-6375-8
- BEN KAO ET AL: "SUBTASK DEADLINE ASSIGMENT FOR COMPLEX DISTRIBUTED SOFT REAL-TIME TASKS", PROCEEDINGS OF THE INTERNATIONAL CONFERENCE ON DISTRIBUTED COMPUTING SYSTEMS. POZNAN, POLAND, JUNE 21 - 24, 1994; [PROCEEDINGS OF THE INTERNATIONAL CONFERENCE ON DISTRIBUTED COMPUTING SYSTEMS], LOS ALAMITOS, IEEE COMP. SOC. PRESS, US, vol. CONF. 14, 21 juin 1994 (1994-06-21), pages 172-181, XP000489080, ISBN: 978-0-8186-5842-6
- XIAOPING (GEORGE) YUAN ET AL: "A DECOMPOSITION APPROACH TO NON-PREEMPTIVE REAL-TIME SCHEDULING", REAL TIME SYSTEMS, KLUWER ACADEMIC PUBLISHERS, DORDRECHT, NL, vol. 6, no. 1, janvier 1994 (1994-01), pages 7-35, XP000420958, ISSN: 0922-6443, DOI: 10.1007/BF01245297
- WEI-KUAN SHIH ET AL: "SCHEDULING TASKS WITH READY TIMES AND DEADLINES TO MINIMIZE AVERAGE ERROR", OPERATING SYSTEMS REVIEW, ACM, NEW YORK, NY, US, vol. 23, no. 3, juillet 1989 (1989-07), pages 14-28, XP000140316, ISSN: 0163-5980
- LIU C L ET AL: "SCHEDULING ALGORITHMS FOR MULTIPROGRAMMING IN A HARD-REAL-TIME ENVIRONMENT", JOURNAL OF THE ASSOCIATION FOR COMPUTING MACHINERY, ACM, NEW YORK, NY, US, vol. 20, no. 1, janvier 1973 (1973-01), pages 46-61, XP000651920, ISSN: 0004-5411, DOI: 10.1145/321738.321743

**Description**

**Domaine technique de l'invention**

L'invention est relative aux systèmes multitâches temps-réel critiques, tels que les systèmes de contrôle-commande utilisés dans les domaines des transports (automobile, ferroviaire, naval, aéronautique), des automates industriels, de l'énergie, ainsi que d'autres systèmes pour lesquels l'allocation maîtrisée des ressources est importante, comme dans les réseaux de communications. L'invention concerne aussi bien les systèmes temps-réel pour lesquels un haut niveau de performance dans la mise en œuvre est requis que les systèmes critiques pour lesquels un haut niveau de garantie est exigé quant à l'utilisation des ressources matérielles d'exécution allouées pour chaque tâche du système.

**Arrière-plan de l'invention**

Dans les systèmes temps-réel critiques, c'est-à-dire qui ne peuvent tolérer aucune violation d'échéance par une mise en retard de l'exécution d'une opération, les tâches sont souvent exécutées selon des méthodes d'ordonnancement statique. On construit alors hors-ligne une allocation temporelle statique du besoin d'utilisation des ressources d'exécution, ce qui permet de démontrer l'indépendance temporelle des tâches entre elles en ce qui concerne l'utilisation des ressources, et en particulier du processeur. Une telle approche est décrite, par exemple, dans l'article ["A method and a technique to model and ensure timeliness in safety critical real-time systems", C. Aussaguès, V. David, Fourth IEEE International Conférence on Engineering of Complex Computer Systems, 1998], et dans les demandes de brevet WO2006-050967 et US2010-0199280.

L'article "SCHEDULING PROCESSES WITH RELEASE TIMES, DEADLINES, PRECEDENCE, AND EXCLUSION RELATIONS" (Jia Xu et al) concerne une méthode pour construire un plan de séquencement hors-ligne unique pour un ensemble de tâches à exécuter sur un même système temps-réel.

La demande de brevet FR2949876 concerne un procédé d'ordonnancement temps-réel d'une application composée d'une pluralité m de tâches logicielles exécutant au moins un traitement sur une pluralité N de trames de données successives.

Cependant, ce type d'approche impose de ne considérer qu'un plan de séquencement unique pour toutes les activités, donc de ne considérer qu'une seule base de temps pour déterminer les échéances. Cela rend difficile une mise en œuvre sans interférence, sur un même processeur, de tâches ayant des bases de temps non-corrélées, comme une tâche utilisant une horloge pour déterminer ses échéances et une tâche utilisant une position d'un objet de vitesse variable pour déterminer ses échéances. Il faudrait pour cela construire deux plans de séquencement cadencés par une même base de temps pour pouvoir les composer en un seul plan de séquencement sans interférences entre tâches.

Cela n'est en pratique réalisable que si les ressources d'exécution sont largement surdimensionnées pour pouvoir envisager le pire-cas de chaque situation.

Dans les systèmes temps-réel à haut degré de performance, qui ne sont pas dits « critiques » car ils peuvent tolérer des violations d'échéance dans une certaine marge, la composition de deux plans de séquencement cadencés par des bases de temps différentes est réalisée par des algorithmes d'ordonnancement dynamiques. De tels algorithmes sont décrits, par exemple, dans ["Scheduling algorithms for multiprogramming in a hard real-time environment", C. Liu, J. Layland, Journal of the ACM, vol. 20, no. 1, pp. 46-61] et ["Foundations of Real-Time Computing: Scheduling and Resource Management", edited by André M. Van Tilborg, Gary M. Koob, 1991, Kluwer Academic Publishers], et également dans ["A method and a technique to model and ensure timeliness in safety critical real-time systems", C. Aussaguès, V. David, Fourth IEEE International Conférence on Engineering of Complex Computer Systems, 1998].

Avec ces algorithmes, des préemptions sont inévitables, c'est-à-dire que le système d'exploitation peut interrompre une opération en cours pour exécuter une opération plus urgente. L'ordonnancement étant dynamique, le nombre et la durée des préemptions n'est pas déterminable, et chaque préemption consomme un temps système pour effectuer un changement de contexte. Cela crée des interférences entre tâches, de sorte que les systèmes sont plus difficiles à dimensionner, moins prédictibles et non reproductibles sur des architectures de processeurs complexes. Les concepteurs de ces systèmes rencontrent en outre des difficultés pour régler correctement les priorités des tâches ou les échéances dans un système avec deux bases de temps différentes. Les options choisies, comme la variation des besoins d'exécution selon la valeur de paramètres applicatifs, rend très complexes et non maitrisables les systèmes construits de la sorte.

**Résumé de l'invention**

On souhaite ainsi disposer d'une technique permettant d'exécuter en temps partagé deux plans de séquencement sans interférence, et cela même si les bases de temps des deux plans sont différentes.

On tend à satisfaire ce besoin en prévoyant un procédé d'exécution de deux tâches en temps partagé, comprenant les étapes consistant à décomposer hors-ligne chaque tâche en une séquence répétitive de trames successives, où chaque trame est associée à une opération atomique ayant un besoin d'exécution, et définit une date de début à partir de laquelle l'opération peut commencer et une date d'échéance à laquelle l'opération doit être terminée, d'où il résulte que chaque trame définit une marge de temps dans laquelle l'opération peut démarrer ; vérifier pour chaque trame d'une première des séquences répétitives que l'opération correspondante peut être exécutée entre deux opérations successives quelconques d'un groupe de trames de la deuxième séquence répétitive, chevauchant la trame ($Fa_i$) de la première séquence répétitive, tout en respectant les dates de début et les échéances des opérations ; et si la vérification est satisfaite, autoriser l'exécution des deux tâches.

Les opérations des deux tâches sont alors ordonnancées selon les cas suivants évalués à chaque date clé, où une date clé survient à chaque échéance, chaque date de début, et chaque fin d'exécution d'opération : si deux opérations peuvent démarrer, exécuter celle qui a l'échéance la plus courte ; et si une seule opération peut démarrer, l'exécuter seulement si son besoin d'exécution est inférieur à la durée restant jusqu'à la date de début de la prochaine trame de l'autre séquence, augmentée de la marge de temps associée à ladite prochaine trame de l'autre séquence.

Selon un mode de mise en œuvre, chaque trame comprend en outre un intervalle de temps de réserve pouvant être nul, situé après l'échéance de la trame ou avant la date de début de la trame, les intervalles de temps de réserve de l'une quelconque des séquences répétitives pouvant être pris pour exécuter une opération de l'autre séquence répétitive.

Selon un mode de mise en œuvre, l'étape de vérification comprend les étapes suivantes :

- pour chaque trame $Fa_i$ de la première séquence répétitive, évaluer les conditions suivantes pour chaque trame $Fb_j$ de la deuxième séquence répétitive :

$$[A.1]\ Da_i \leq Tb_{j+1}$$

$$[B.1]\ Da_i \leq Rb_j + Tb_{j+1}$$
$$et\ Db_j \leq Ta_i,\ et$$

$$[C.1]\ Db_j \leq Ta_i,$$

où D, T et R sont le besoin d'exécution, la marge de temps, et le temps de réserve, indexés par un identifiant de séquence répétitive et le numéro de trame dans la séquence ;
- répéter les évaluations des conditions en intervertissant les trames $Fa_i$ et $Fb_j$ ;
- autoriser l'exécution des tâches si les trois conditions [A.1], [B.1] et [C.1] sont satisfaites pour tout couple (i, j).

Selon un mode de mise en œuvre, l'étape de vérification comprend les étapes suivantes :

- si la condition [A.1] est fausse, évaluer la condition suivante :

$$[A.2]\ Da_i \leq Tb_{j+1} + Rb_{j+1} + Tb_{j+2}$$
$$et\ Da_i + Db_{j+1} \leq Ta_i + Tb_{j+1}$$

- si la condition [B.1] est fausse, évaluer la condition suivante :

$$[B.2]\ Da_i \leq Tb_{j+1} + Rb_{j+1} + Tb_{j+2}$$
$$et\ Db_j + Da_i + Db_{j+1} \leq Ta_i + Tb_{j+1}$$

- si la condition [C.1] est fausse, évaluer la condition suivante :

$$[C.2]\ Db_j \leq Ta_i + min[\ Tb_j - Da_i,\ Ra_i,\ Ra_{i-1}\ ]$$

- autoriser l'exécution des tâches si les conditions [A.1] ou [A.2], et [B.1] ou [B.2], et [C.1] ou [C.2] sont satisfaites pour tout couple (i, j).

Selon un mode de mise en œuvre, les bases de temps déterminant les durées des trames sont variables de sorte que les marges de temps T et les réserves de temps R varient d'un facteur 1 à za pour les trames Fa et de 1 à zb pour les trames Fb, l'étape de vérification comprenant alors les étapes suivantes :

- si la condition [A.1] est fausse, évaluer la condition suivante :

$$[A.2] \; Da_i \leq Tb_{j+1} + Rb_{j+1} + Tb_{j+2}$$
$$et \; min[ \; q_l(zb \bullet (Tb_j + Rb_j) + (zb-1)Db_j), \; Da_i \; ] + Db_{j+1} \leq Ta_i$$

$$où \; q_l = (Da_i - Tb_{j+1})/(Tb_j + Rb_j) \; ;$$

- si la condition [B.1] est fausse, évaluer la condition suivante :

$$[B.2] \; Da_i \leq Tb_{j+1} + Rb_{j+1} + Tb_{j+2}$$
$$et \; Db_j + min[ \; q_l(zb \bullet Tb_j + (zb-1)Db_j) + zb \bullet Rb_j, \; Da_i \; ] + Db_{j+1} \leq Ta_i$$

$$où \; q_l = (Da_i - Rb_j - Tb_{j+1})/Tb_j \; ;$$

- si la condition [C.1] est fausse, évaluer la condition suivante :

$$[C.2] \; Db_j \leq Ta_i + min[ \; Tb_j\text{-}Da_i, \; Ra_i, \; Ra_{i-1} \; ]$$

- autoriser l'exécution des tâches si les conditions [A.1] ou [A.2], et [B.1] ou [B.2], et [C.1] ou [C.2] sont satisfaites pour tout couple (i, j).

Selon un mode de mise en œuvre, l'étape de vérification comprend les étapes suivantes :

- si la condition [B.1] est fausse, évaluer avant la condition [B.2] la condition suivante :

$$[B.1.1] \; Da_i \leq Tb_j + Rb_j + Tb_{j+1}$$
$$et \; Db_{j-1} \leq T_l + min[ \; Tb_{j-1} + Db_{j-1} + Rb_{j-1} - T_l - Da_{i-1}, \; Ra_{i-2} \; ]$$

$$où \; q_l = (Da_i - Rb_j - Tb_{j+1})/Tb_j \; et \; T_l = Ta_{i-1} - (1-q_l)Tb_j + Ra_{i-1}$$

- autoriser l'exécution des tâches si les conditions [A.1] ou [A.2], et [B.1] ou [B.1.1], et [C.1] ou [C.2] sont satisfaites pour tout couple (i, j).

**Description sommaire des dessins**

Des modes de réalisation seront exposés dans la description suivante, faite à titre non limitatif en relation avec les figures jointes parmi lesquelles :

- la figure 1 illustre un exemple de séquence répétitive de trames servant à composer un plan de séquencement d'une tâche ;

- la figure 2 représente la composition d'une trame d'une séquence répétitive et différentes possibilités de démarrage d'une opération dans la trame ;

- les figures 3A à 3C illustrent différentes possibilités de déroulement en temps partagé de deux séquences répétitives de trames, la figure 3C illustrant une situation d'erreur ;

- les figures 4A à 4C illustrent des cas de déroulement en temps partagé de deux séquences selon une première hypothèse dans l'élaboration de critères de validation d'une composition de deux séquences ;

- les figures 5A et 5B illustrent des cas de déroulement en temps partagé de deux séquences selon une deuxième hypothèse dans l'élaboration des critères de validation d'une composition de deux séquences ;

- la figure 6 illustre un cas de déroulement en temps partagé de deux séquences selon une troisième hypothèse dans l'élaboration des critères de validation d'une composition de deux séquences ;

- la figure 7 illustre un exemple de succession de trames servant à établir une autre condition de validité dans la situation de la figure 5A ; et

- la figure 8 représente un cas supplémentaire de déroulement de deux séquences selon la troisième hypothèse, permettant d'élaborer des conditions de validité alternatives.

**Description d'un mode de réalisation de l'invention**

Une tâche temps-réel peut être considérée comme une séquence de traitements ou opérations élémentaires à exécuter l'une après l'autre, où chaque opération a une échéance dans une base de temps associée à la tâche. Dans un système temps-réel critique, les échéances sont impératives, c'est-à-dire qu'une opération qui dépasserait son échéance provoquerait une condition d'erreur et l'arrêt du système, par exemple. Les techniques décrites ci-après sont applicables à un tel système et permettent d'améliorer malgré tout le degré de performance par le fait que plusieurs tâches, même ayant des bases de temps non corrélées, pourront être exécutées en temps partagé sur le système.

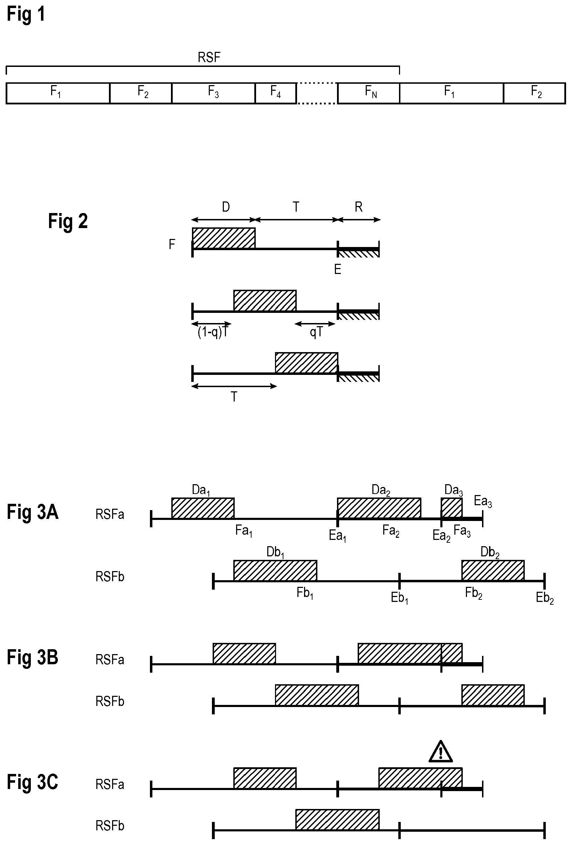

La figure 1 illustre une décomposition d'une tâche en une séquence répétitive de trames RSF, où chaque trame F est associée à une opération séquentielle de la tâche. La tâche est mise en œuvre en exécutant en boucle la séquence répétitive RSF.

La figure 2 représente la structure temporelle d'une trame F. Le début de la trame correspond à la date à partir de laquelle l'opération peut commencer. La trame définit une échéance E à laquelle l'opération doit être terminée. L'opération est supposée atomique, c'est-à-dire qu'elle ne peut pas être suspendue pour exécuter une autre opération. L'échéance E peut être séparée de la fin de la trame par un intervalle de temps de réserve R optionnel, c'est-à-dire pouvant être nul. Un intervalle de temps D est le besoin d'exécution de l'opération associée à la trame. Le besoin d'exécution D correspond, par exemple, au nombre de cycles d'horloge de processeur requis pour exécuter l'opération - il peut ainsi être exprimé en un temps fixe en fonction des caractéristiques du processeur du système cible. Un intervalle T correspond à la marge de temps entre le début de la trame et l'échéance E pour exécuter l'opération.

Ainsi, comme le représente la figure 2, l'opération D peut commencer à tout instant entre le début de la trame, où l'intervalle T sépare la fin de l'opération et l'échéance, et une durée T après le début de la trame, où l'opération se termine juste à l'échéance E. Pour les situations intermédiaires, on note $qT$ l'intervalle entre la fin de l'opération et l'échéance, avec $0 \leq q \leq 1$, et $(1-q)T$ l'intervalle complémentaire entre le début de la trame et le début de l'opération.

La somme des intervalles de réserve R correspond, par exemple, à un temps que le programmeur alloue au système pour effectuer des opérations non temps-réel, comme des entrées/sorties.

Deux tâches que l'on souhaite exécuter en temps partagé sur un système temps-réel critique sont ainsi décomposées en séquences répétitives de trames. Pour que les tâches puissent être exécutées sans interférence, c'est-à-dire en respectant l'atomicité des opérations, on cherche à composer les séquences de sorte que chaque opération d'une séquence puisse à tout moment être exécutée entre deux opérations successives de l'autre séquence, tout en respectant les contraintes des trames des deux séquences, à savoir les échéances et les débuts de trame.

Les figures 3A à 3C représentent différentes situations pouvant être rencontrées au déroulement de deux séquences RSFa et RSFb. On suppose, pour simplifier les explications, que les intervalles de réserve R sont nuls.

A la figure 3A, à titre d'exemple, la séquence RSFa comprend trois trames $Fa_1$ à $Fa_3$ de paramètres respectifs $(Da_1 = 3, Ta_1 = 6)$, $(Da_2 = 4, Ta_2 = 1)$, et $(Da_3 = 1, Ta_3 = 1)$, où les valeurs de temps sont exprimées en unités normalisées. La séquence RSFb commence 3 unités après le début de la trame Fa1 et elle comprend deux trames $Fb_1$ et $Fb_2$ de paramètres respectifs $(Db_1 = 4, Tb_1 = 5)$ et $(Db_2 = 3, Tb_2 = 4)$.

L'opération $Da_1$ commence une unité après le début de la trame correspondante. A la fin de l'opération $Da_1$, on ne peut pas encore démarrer l'opération $Da_2$, mais on peut démarrer l'opération $Db_1$. A la fin de l'opération $Db_1$, aucune opération n'est prête à être exécutée. On attend le début de la trame $Fa_2$, ici l'échéance $Ea_1$, pour démarrer l'opération $Da_2$. A la fin de l'opération $Da_2$, l'opération $Db_2$ est prête pour exécution, mais on ne peut pas la lancer. En effet, si l'opération $Db_2$ était lancée tout de suite, elle se terminerait juste à l'échéance $Ea_3$, de sorte que l'opération $Da_3$ ne pourrait pas s'exécuter avant cette échéance. Dans ce cas, on attend le début de la trame $Fa_3$ pour lancer l'opération $Da_3$. Enfin, à la fin de l'opération $Da_3$, on peut démarrer l'opération $Db_2$.

A la figure 3B, les mêmes paramètres sont conservés, sauf que l'opération $Da_1$ démarre trois unités après le début de la trame. Les opérations $Db_1$ et $Da_2$ se trouvent retardées de deux unités par rapport à la figure 3A, tout en respectant les contraintes des trames correspondantes. L'opération $Da_2$ se termine juste à son échéance $Ea_2$.

A la figure 3C, les mêmes paramètres sont conservés, sauf que l'opération $Da_1$ démarre quatre unités après le début de la trame. Les opérations $Db_1$ et $Da_2$ se trouvent retardées de trois unités par rapport à la figure 3A. L'opération $Db_1$ peut encore être exécutée en respectant son échéance $Eb_1$, mais l'opération $Da_2$ viole son échéance $Ea_2$.

Une première étape commune aux techniques visées ici est la composition, pour deux tâches à exécuter en temps partagé, de deux séquences répétitives RSFa et RSFb qui puissent être déroulées dans les conditions de la figure 3A ou 3B, quel que soit le décalage temporel entre les débuts des séquences. Cette composition est statique, c'est-à-dire faite hors-ligne par le programmeur.

Une deuxième étape est la vérification que deux séquences quelconques sont compatibles, c'est-à-dire qu'elles peuvent être déroulées de sorte que chaque opération puisse être exécutée en respectant ses contraintes, comme aux figures 3A et 3B.

Cette vérification de compatibilité peut être mise en œuvre dans un outil de développement permettant au programmeur de composer les séquences par essais successifs. Elle est de préférence mise en œuvre également dans le système temps-réel lui-même, au chargement pour exécution des plans de séquencement définis par les deux séquences répétitives. Le système peut alors être configuré pour refuser de démarrer si les séquences sont détectées comme incompatibles.

Une troisième étape est l'ordonnancement sur le système temps-réel des opérations des deux séquences. Comme le montrent les figures, il ne suffit pas d'alterner les opérations de la première séquence avec les opérations de la deuxième séquence ou de démarrer une opération dès qu'elle est prête pour exécution. L'ordonnancement est effectué selon les cas suivants, évalués à chaque date clé. Les dates clés sont les débuts de trame des deux séquences, les échéances, et les fins d'opération. Lorsque les intervalles de temps de réserve R (figure 2) sont nuls, comme c'est le cas dans les exemples présentés, les échéances coïncident avec des débuts de trame. Pour une date clé donnée associée à une première des séquences, on appelle « trame concurrente » la trame en cours de la deuxième séquence.

1) Aucune opération ne peut démarrer. Ce cas se produit lorsqu'une opération est déjà en cours (comme à l'échéance $Eb_1$ de la figure 3A), ou bien à la fin d'une opération qui s'est exécutée entre l'opération de la trame concurrente et son échéance, comme pour l'opération $Db_1$ de la figure 3A. Dans ce cas, on attend la date clé suivante.

2) Deux opérations peuvent démarrer. Ce cas se produit généralement lorsque débute une trame et qu'une opération est en attente dans la trame concurrente, comme c'est le cas à l'échéance $Ea_2$ des figures 3A et 3B. On exécute alors l'opération qui a l'échéance la plus courte ($Da_3$ dans les figures 3A et 3B). Le cas se produit également lorsque deux trames concurrentes débutent en même temps.

3) Une seule opération peut démarrer. Ce cas se produit généralement à la fin d'une opération ($Da_1$), ou au début d'une trame lorsque l'opération de la trame concurrente a terminé ($Ea_1$, figure 3A). On exécute alors l'opération seulement si son besoin d'exécution est inférieur ou égal à la durée restant jusqu'au début de la prochaine trame concurrente, augmentée de la marge de temps associée à cette trame concurrente. Par exemple, à la figure 3A, l'opération $Da_2$ est prête à démarrer à l'échéance $Ea_1$, il reste 3 unités jusqu'au début de la trame $Fb_2$, et $Tb_2 = 4$. L'opération $Da_2$ est démarrée car $Da_2 = 4 < 3 + 4$.
Dans le cas contraire, on attend la prochaine date clé pour réévaluer la situation. Par exemple, à la figure 3A, l'opération $Db_2$ est prête pour exécution à la fin de l'opération $Da_2$. Cependant, il reste une unité jusqu'au début de la trame $Fa_3$ et $Ta_3 = 1$, d'où $Db_2 = 3 > 1 + 1$.

On définit maintenant des critères de compatibilité entre deux séquences répétitives RSFa et RSFb quelconques servant à définir des plans de séquencement pour un système temps-réel.

Une vérification de compatibilité exhaustive consisterait à examiner toutes les combinaisons possibles de positions des opérations dans leurs trames et toutes les positions possibles d'une des séquences par rapport à l'autre, avec une granularité d'un cycle d'horloge, pour évaluer si les opérations concurrentes peuvent être exécutées selon les contraintes imposées.

Une telle vérification exhaustive serait difficile à réaliser dans un temps raisonnable. On cherche des critères simplifiés qui puissent être évalués en ligne sur le système temps-réel au moment du chargement des plans de séquencement accompagnant le code exécutable des tâches. Pour cela, on envisage trois hypothèses générales de positionnement de chaque trame de l'une des séquences par rapport à chaque trame de l'autre séquence. Pour chaque hypothèse, on cherche à vérifier que l'opération de la trame considérée $Fa_i$ peut être exécutée dans un intervalle libre laissé par les trames concurrentes $Fb_j$, $Fb_{j+1}$... chevauchant la trame $Fa_i$. Deux trames $Fa_i$ et $Fb_j$ sont considérées comme compatibles lorsque la vérification est satisfaite pour chacune des trois hypothèses.

- Hypothèse (A) : la trame considérée $Fa_i$ débute alors que l'opération $Db_j$ de la première trame concurrente $Fb_j$ a été exécutée.

- Hypothèse (B) : l'opération de la première trame concurrente est en cours d'exécution.

- Hypothèse (C) : l'opération de la trame concurrente n'a pas démarré.

Pour chaque hypothèse on cherche des critères indépendants de la position relative des trames. Pour cela, de façon générale, on minore les intervalles de temps inconnus servant à trouver des créneaux pour exécuter les opérations, et on majore les intervalles de temps inconnus servant à vérifier le respect des échéances.

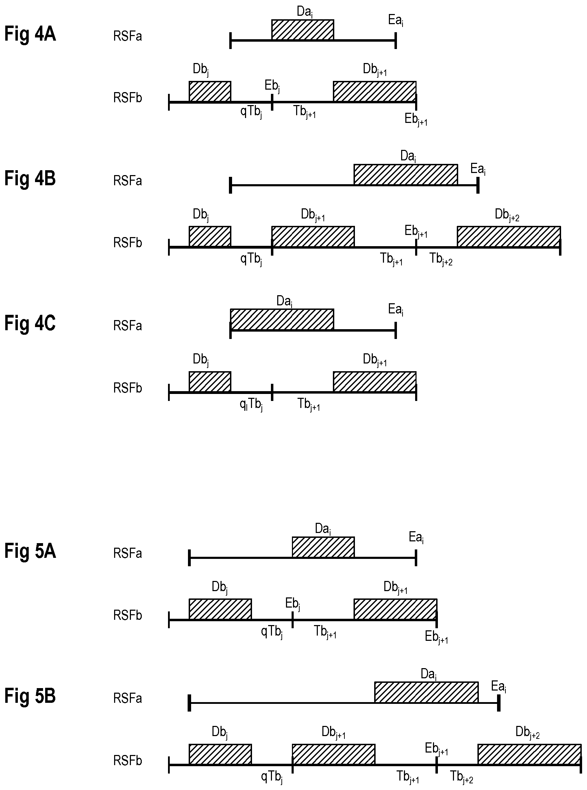

Les figures 4A à 4C illustrent des exemples de trames pouvant servir à l'élaboration de critères de compatibilité selon l'hypothèse (A). La trame considérée $Fa_i$ démarre pendant la trame concurrente $Fb_j$, alors que l'opération $Db_j$ de cette trame concurrente est terminée. La trame $Fa_i$ chevauche la trame concurrente suivante $Fb_{j+1}$. Tout ce qu'on sait du début de la trame $Fa_i$ est qu'il est situé dans un intervalle $qTb_j$ suivant la fin de l'opération $Db_j$, où $0 \leq q \leq 1$.

A la figure 4A, la trame $Fa_i$ se termine avant la trame $Fb_{j+1}$. L'opération $Da_i$ pourrait être lancée dès la fin de l'opération $Db_j$ dans un intervalle $qTb_j + Tb_{j+1}$. Mais q étant inconnu et quelconque, on envisage le pire cas avec q = 0, c'est-à-dire où l'opération $Da_i$ démarre au début de la trame $Fb_{j+1}$. Ainsi, l'opération $Da_i$ peut être exécutée si :

$$Da_i < Tb_{j+1}. \qquad\qquad [A.1]$$

A la figure 4B, l'opération $Da_i$ ne satisfait pas la condition A.1. On envisage alors d'exécuter l'opération $Da_i$ à cheval sur les trames $Fb_{j+1}$ et $Fb_{j+2}$, signifiant que la trame $Fa_i$ chevauche les trois trames $Fb_j$ à $Fb_{j+2}$. Cela demande de satisfaire à la fois une condition pour garantir que la somme des intervalles $Tb_{j+1}$ et $Tb_{j+2}$ soit suffisante, et une condition pour garantir que l'échéance $Ea_i$ soit respectée :

$$Dai \leq Tb_{j+1} + Tb_{j+2}$$

ET

$$qTb_j + Db_{j+1} + Da_i \leq Da_i + Ta_i, \text{ soit } qTb_j + Db_{j+1} \leq Ta_i$$

Le pire cas pour le respect de l'échéance est q = 1, majorant le membre gauche de l'inégalité. Donc l'échéance $Ea_i$ est respectée dans tous les cas si :

$$Tb_j + Db_{j+1} \leq Ta_i$$

Cependant, il n'est pas réaliste d'envisager dans un même contexte des situations pire-cas utilisant les deux valeurs extrêmes d'une même variable. En réalité, une certaine plage de valeurs pour la variable q peut être exclue si on considère le comportement du système réel dans la situation de la figure 4A.

La figure 4C illustre le comportement du système réel dans la situation de la figure 4A. L'opération $Db_j$ étant terminée, le système, connaissant les paramètres des trames en ligne, lance l'opération $Da_i$ dès le début de la trame $Fa_i$ du moment que :

$$Da_i \leq qTb_j + Tb_{j+1}$$

c'est-à-dire si les conditions 3) du procédé d'ordonnancement sont respectées.

Notons $q_l$ la valeur limite de q pour atteindre l'égalité dans l'inéquation ci-dessus :

$$Da_i = q_lTb_j + Tb_{j+1}, \text{ soit } q_l = (Da_i - Tb_{j+1})/Tb_j$$

Si $q \geq q_l$, on est certain que l'exécution sur le système réel a lieu selon la figure 4C et que l'on n'est pas amené à considérer la situation de la figure 4B. Le pire cas pour la figure 4B est alors $q = q_l$, de sorte que :

$q_l Tb_j + Db_{j+1} \leq Ta_i$, soit, en remplaçant $q_l$ par sa valeur, $Da_i - Tb_{j+1} + Db_{j+1} \leq Ta_i$, ou encore $Da_i + Db_{j+1} \leq Ta_i + Tb_{j+1}$

L'expression utilisée pour calculer la valeur $q_l$ n'est pas bornée à 1. Si elle dépasse 1, cela n'a pas de sens pratique. La valeur $q_l$ est alors plafonnée à 1.

Les conditions résultant de la situation de la figure 4B sont donc :

$$Dai \leq Tb_{j+1} + Tb_{j+2}$$
$$ET \qquad\qquad\qquad\qquad [A.2]$$
$$q_l Tb_j + Db_{j+1} \leq Ta_i$$

La condition A.1 est vérifiable dans une situation où la trame $Fa_i$ chevauche au moins deux trames Fb consécutives. La condition A.2 est vérifiable dans une situation où la trame $Fa_i$ chevauche au moins trois trames Fb consécutives. On peut trouver de manière similaire des conditions A.3 et suivantes vérifiables dans des situations où la trame $Fa_i$ chevauche au moins quatre trames Fb consécutives ou plus, mais la satisfaction de telles conditions est de moins en moins probable. Les conditions A.1 et A.2 (et, le cas échéant, A.3 et suivantes) sont alternatives, c'est-à-dire qu'il suffit que l'une quelconque de ces conditions soit vérifiée pour qu'on poursuive par la validation des autres hypothèses.

Les figures 5A et 5B illustrent des exemples de trames pouvant servir à l'élaboration de critères de compatibilité selon l'hypothèse (B). La trame considérée $Fa_i$ démarre pendant la trame concurrente $Fb_j$, alors que l'opération $Db_j$ de cette trame concurrente est en cours. Dans le pire cas, comme cela est représenté, l'opération $Db_j$ démarre. Les situations sont similaires à celles des figures 4A et 4B, sauf que l'on tient compte de la durée $Db_j$ pour vérifier le respect de l'échéance $Ea_i$.

D'après la figure 5A, on a :
$Da_i \leq Tb_{j+1}$, et, pour respecter l'échéance $Ea_i$, $Db_j + Da_i \leq Da_i + Ta_i$, soit $Db_j \leq Ta_i$

Les conditions résultant de la situation de la figure 4B sont donc :

$$Da_i \leq Tb_{j+1}$$
$$ET \qquad\qquad\qquad\qquad [B.1]$$
$$Db_j \leq Ta_i$$

D'après la figure 5B, en suivant le même raisonnement que pour la figure 4B, on obtient :

$$Da_i \leq Tb_{j+1} + Tb_{j+2}$$
$$ET \qquad\qquad\qquad\qquad [B.2]$$
$$Db_j + q_l Tb_j + Db_{j+1} \leq Ta_i$$

Comme pour la condition A.1, la condition B.1 est vérifiable dans une situation où la trame $Fa_i$ chevauche au moins deux trames Fb consécutives. La condition B.2 est vérifiable dans une situation où la trame $Fa_i$ chevauche au moins trois trames Fb consécutives. On peut trouver de manière similaire des conditions B.3 et suivantes vérifiables dans des situations où la trame $Fa_i$ chevauche au moins quatre trames Fb consécutives ou plus, mais la satisfaction de telles conditions est de moins en moins probable. Les conditions B.1 et B.2 (et, le cas échéant, B.3 et suivantes) sont alternatives, c'est-à-dire qu'il suffit que l'une quelconque de ces conditions soit vérifiée pour qu'on poursuive par la validation des autres hypothèses.

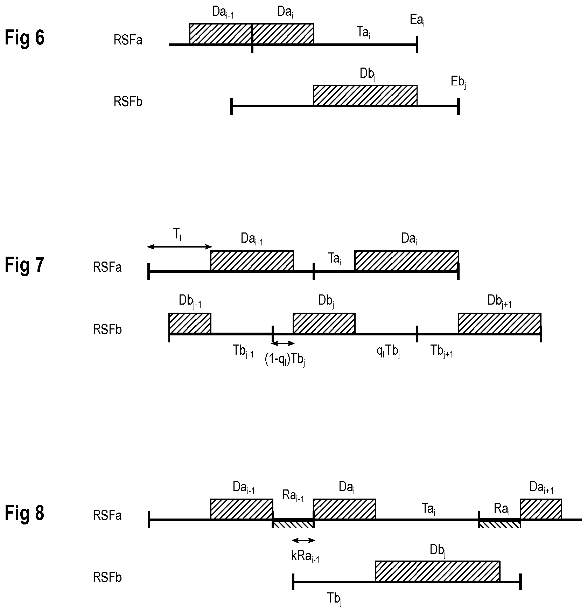

La figure 6 illustre un exemple de trames pouvant servir à l'élaboration des critères de compatibilité selon l'hypothèse (C). Dans le cadre de l'hypothèse (C) on suppose que l'opération $Db_j$ n'a pas encore été exécutée. Si l'échéance de la trame $Fa_i$ arrive après l'échéance de la trame $Fb_j$, on rencontre les mêmes situations que celles des figures 5A et 5B, où l'opération $Db_j$ commence tout juste. Ainsi, on n'envisage dans le cadre de l'hypothèse (C) que le cas où l'échéance de la trame $Fa_i$ arrive avant l'échéance de la trame $Fb_j$.

Les deux opérations $Da_i$ et $Db_j$ sont prêtes pour exécution au début de la trame $Fa_i$. On peut supposer que l'opération $Db_j$ n'a pas été lancée au début de sa trame, car les conditions 3) de l'ordonnacement n'ont pas été satisfaites, par exemple, comme cela est représenté, lorsque l'opération $Da_{i-1}$ se termine à son échéance au début de la trame $Fa_i$. L'échéance $Ea_i$ étant la plus courte, l'opération $Da_i$ est lancée en premier. L'opération $Db_j$ est lancée à la fin de l'opération $Da_i$. Dans le pire cas dans les limites de l'hypothèse (C), les échéances des trames $Fa_i$ et $Fb_j$ coïncident, auquel cas, on doit avoir :

$$Db_j \leq Ta_i \qquad\qquad\qquad\qquad [C.1]$$

On retrouve cette même inéquation en supposant que l'opération $Db_j$ démarre au début de la trame $Fa_i$, bien que le procédé d'ordonnancement prévu ne procèderait pas ainsi. Pour que l'opération $Da_i$ se termine avant son échéance, on vérifie $Db_j + Da_i \leq Da_i + Ta_i$, soit la même inéquation que ci-dessus.

Chaque trame $Fa_i$ est ainsi comparée à chaque trame $Fb_j$, en vérifiant que les échéances des trames $Fa_i$ sont respectées, sans toutefois vérifier le respect des échéances des trames $Fb_j$. Cela forme une première passe de vérification. Une deuxième passe pour compléter la vérification consiste alors à répéter les opérations ci-dessus en comparant chaque trame $Fb_j$ à chaque trame $Fa_i$, en vérifiant de ce fait le respect des échéances des trames $Fb_j$.

La vérification de la compatibilité de deux séquences répétitives RSFa et RSFb, ayant respectivement Na et Nb trames, peut être résumée par le pseudo-code suivant. Dans ce pseudo-code, on a condensé des conditions alternatives dans des expressions min(x, y) du côté gauche des inéquations, et max(x, y) du côté droit des inéquations, et on a condensé des conditions nécessaires dans des expressions min(x, y) du côté droit des inéquations, et max(x, y) du côté gauche des inéquations. On a prévu des conditions A.3 et B.3, mentionnées précédemment, pour tenir compte de l'éventualité où la trame $Fa_i$ chevaucherait quatre trames $Fb_j$ à $Fb_{j+3}$. Les opérations sur les indices i et j sont bien entendu effectuées modulo la valeur maximale de l'indice (Na pour i, et Nb pour j), puisque les séquences de trames sont répétables à l'infini.

*Pour chaque i entre 0 et Na-1 faire :*

    *Pour chaque j entre 0 et Nb-1 faire :*

        *[A.1]*

        *si $Da_i \leq Tb_{j+1}$ alors continuer en [B.1]*

        *[A.2]*

        *$q_l := (Da_i - Tb_{j+1})/Tb_j$*

        *si $q_l > 1$ ou $Tb_j = 0$ alors $q_l := 1$*

        *si $Da_i \leq Tb_{j+1} + Tb_{j+2}$*

        *et $q_l Tb_j + Db_{j+1} \leq Ta_i$*

            *alors continuer en [B.1]*

        *[A.3]*

        *si $Da_i \leq Tb_{j+2} + Tb_{j+3}$*

        *et $q_l Tb_j + Db_{j+1} + Db_{j+2} + min[\ Tb_{j+1}, Da_i\ ] \leq Ta_i$*

            *alors continuer en [B.1]*

        *terminer la boucle avec échec*

        *[B.1]*

        *si $Da_i \leq Tb_{j+1}$*

        *et $Db_j \leq Ta_i$*

            *alors continuer en [D]*

        *[B.1.1]*

        *$q_l := (Da_i - Tb_{j+1})/Tb_j$*

        *si $q_l > 1$ ou $Tb_j = 0$ alors $q_l := 1$ et continuer en [B.2]*

        *$T_l := Ta_{i-1} - (1-q_l)Tb_j$*

        *si $Db_{j-1} \leq T_l$*

            *alors continuer en [C.1]*

        *[B.2]*

        *si $Da_i \leq Tb_{j+1} + Tb_{j+2}$*

        *et $Db_j + q_l Tb_j + Db_{j+1} \leq Ta_i$*

            *alors continuer en [C.1]*

*[B.3]*
*si $Da_i \leq Tb_{j+2} + Tb_{j+3}$*
*et $Db_j + q_lTb_j + Db_{j+1} + min[ Tb_{j+1}, Da_i] + Db_{j+2} \leq Ta_i$*
    *alors continuer en [C.1]*
*terminer la boucle avec échec*

*[C.1]*
*si $Db_j \leq Ta_i$*
    *alors continuer en [D]*
*terminer la boucle avec échec*
    *[D] Passer au j suivant*
*Passer au i suivant*

Pour compléter la vérification, come on l'a précédemment indiqué, cette boucle est réitérée en intervertissant les trames Fa et Fb.

Dans cette boucle, selon une variante par rapport a ce qui a été décrit précédemment, avant de passer à l'évaluation de la condition B.2, on évalue une condition B.1.1.

La figure 7 illustre un exemple de succession de trames servant à établir la condition B.1.1. Les trames $Fa_i$ et $Fb_j$ sont dans les mêmes conditions qu'à la figure 4A, mais au lieu de démarrer l'opération $Da_i$ au début de la trame $Fb_{j+1}$, on suppose qu'on peut la démarrer immédiatement après l'opération $Db_j$, et on cherche dans les trames précédentes $Fa_{i-1}$ et $Fb_{j-1}$ les conditions générales qui le permettent avec $q = q_l$. La condition B.1.1, comme la condition B.1, est basée sur l'hypothèse que la trame $Fa_i$ chevauche deux trames ($Fb_j$ et $Fb_{j+1}$), ce qui correspond à une situation plus probable à rencontrer que celle où la trame $Fa_i$ chevauche trois trames ou plus.

Comme on l'a précédemment indiqué, les trames peuvent incorporer un temps de réserve R pouvant être pris par le système pour effectuer des tâches non temps-réel. Un tel temps de réserve peut être pris pour exécuter des opérations temps-réel. Il vient s'ajouter aux marges de temps T d'une séquence pour favoriser l'exécution des opérations D de l'autre séquence, mais il peut durcir les conditions de respect des échéances.

Des temps de réserve R non-nuls peuvent notamment assouplir la condition C.1.

La figure 8 illustre un exemple de succession de trames servant à établir une contrainte assouplie dans le cas où la condition C.1 n'est pas satisfaite, c'est-à-dire si $Db_j > Ta_i$. Dans le cadre de l'hypothèse C, on suppose que l'opération $Db_j$ n'a pas encore démarré au début de la trame $Fa_i$. L'opération $Da_i$, ayant l'échéance la plus courte, est démarrée dès le début de la trame $Fa_i$. La trame $Fb_j$ démarre avant la trame $Fa_i$, on suppose pendant l'intervalle $Ra_{i-1}$ de la trame $Fa_{i-1}$. On note $kRa_{i-1}$ l'intervalle entre le début de la trame $Fb_j$ et le début de la trame $Fa_i$, avec $0 \leq k \leq 1$.

Si l'opération $Db_j$ n'a pas été ordonnancée au début de sa trame $Fb_j$, c'est que :

$$Db_j > kRa_{i-1} + Ta_i.$$

On note $k_l$ la valeur limite de k telle que $Db_j = k_lRa_{i-1} + Ta_i$, soit $k_l = (Db_j-Ta_i)/Ra_{i-1}$. Si $k > k_l$, on est sûr que l'opération $Db_j$ peut être ordonnancée avant le début de la trame $Fa_i$ - ce cas n'est pas à considérer, car il ne correspond pas à l'hypothèse C. On ne considère alors que les valeurs de k comprises entre 0 et $k_l$.

Pour que $Da_i$ puisse s'exécuter, il faut que $Da_i \leq Tb_j - kRa_{i-1}$. Le pire cas est $k = k_l$, auquel cas on a :
$Da_i \leq Tb_j - k_lRa_{i-1}$, soit, en remplaçant $k_l$ par sa valeur :

$$Da_i \leq Tb_j - (Db_j-Ta_i), \text{ ou}$$

$$Db_j \leq Ta_i + Tb_j - Da_i$$

Le coefficient $k_l$ est au plus égal à 1, ce qui s'exprime par :

$$Db_j - Ta_i \leq Ra_{i-1}, \text{ soit}$$

$$Db_j \leq Ta_i + Ra_{i-1}$$

Finalement, pour ne pas contraindre l'exécution de l'opération $Da_{i+1}$, l'opération $Db_j$ ne doit pas déborder sur la trame $Fa_{i+1}$. Cela est satisfait si :

$$Db_j \leq Ta_i + Ra_i.$$

On aboutit ainsi à la condition suivante, alternative à la condition C.1 :

$$Db_j \leq Ta_i + Tb_j - Da_i$$
$$\text{ET}$$
$$Db_j \leq Ta_i + Ra_{i-1} \qquad [C.2]$$
$$\text{ET}$$
$$Db_j \leq Ta_i + Ra_i$$

Le pseudo-code suivant tient compte des réserves de temps R.

*Pour chaque i entre 0 et Na-1 faire :*
    *Pour chaque j entre 0 et Nb-1 faire :*

**[A.1]**
*si $Da_i \leq Tb_{j+1}$ alors continuer en* **[B.1]**

**[A.2]**
$q_l := (Da_i - Tb_{j+1})/(Tb_j + Rb_j)$
*si $q_l > 1$ ou $Tb_j + Rb_j = 0$ alors $q_l := 1$*
*si $Da_i \leq Tb_{j+1} + Rb_{j+1} + Tb_{j+2}$*
*et $q_l(Tb_j + Rb_j) + Db_{j+1} \leq Ta_i$*
    *alors continuer en* **[B.1]**

**[A.3]**
*si $Da_i \leq Tb_{j+2} + Rb_{j+2} + Tb_{j+3}$*
*et $Db_{j+1} + q_l(Tb_j + Rb_j)$*
*$+ Db_{j+2} + min[\, Tb_{j+1} + Rb_{j+1}, Da_i] \leq Ta_i$*
    *alors continuer en* **[B.1]**
*terminer la boucle avec échec*


**[B.1]**
*si $Da_i \leq Rb_j + Tb_{j+1}$*
*et $Db_j \leq Ta_i$*
    *alors continuer en* **[C.2]**
$ql := (Da_i - Rb_j - Tb_{j+1})/Tb_j$
*si $q_l > 1$ ou $Tb_j = 0$ alors $q_l := 1$ et continuer en* **[B.2]**

**[B.1.1]**
$T_l := Ta_{i-1} - (1-q_l)Tb_j + Ra_{i-1}$
*si $Db_{j-1} \leq T_l + min[\, Tb_{j-1} + Db_{j-1} + Rb_{j-1} - T_l - Da_{i-1}, Ra_{i-2}]$*
    *alors continuer en* **[C.1]**

**[B.1.2]**
*si $Db_{j-1} + Rb_{j-1} \leq T_l$*
*et $Da_{i-1} \leq Tb_{j-2} + Rb_{j-2} + Tb_{j-1}$*
*et $Tb_{j-2} + Db_{j-2} + Rb_{j-2} + Tb_{j-1} + Db_{j-1} + Rb_{j-1} \leq Ra_{i-2} + T_l + Da_{i-1}$* ☐
    *alors continuer en* **[C.1]**

**[B.2]**
*si $Da_i \leq Tb_{j+1} + Rb_{j+1} + Tb_{j+2}$*
*et $Db_j + q_lTb_j + Rb_j + Db_{j+1} \leq Ta_i$*
    *alors continuer en* **[C.1]**

**[B.3]**
*si $Da_i \leq Tb_{j+2} + Rb_{j+2} + Tb_{j+3}$*
*et $Db_j + q_lTb_j + Rb_j$*
*$+ Db_{j+1} + min[\, Tb_{j+1} + Rb_{j+1}, Da_i]$*
*$+ Db_{j+2} \leq Ta_i$*
    *alors continuer en* **[C.1]**

*terminer la boucle avec échec*

*[C.1]*
*si $Db_j \leq Ta_i$*
  *alors continuer en [D]*
*[C.2]*
*si $Db_j \leq Ta_i + min[ Tb_j\text{-}Da_i, Ra_i, Ra_{i-1} ]$*
  *alors continuer en [D]*
*terminer la boucle avec échec*
*[D] Passer au j suivant*
*Passer au i suivant*

La condition B.1.2 qui apparaît dans ce pseudo-code est établie selon la même démarche que la condition B.1.1 en poussant les recherches sur les trame $Fa_{i-2}$ et $Fb_{j-2}$.

Jusqu'à maintenant, on a supposé que les bases de temps servant à cadencer les deux tâches étaient isochrones, c'est-à-dire que les durées des intervalles de l'une des séquences n'étaient pas variables par rapport à celles de l'autre séquence. En pratique, on peut être amené à composer deux tâches utilisant des bases de temps non corrélées, comme des tâches indexées sur les positions d'éléments mobiles à des vitesses variables.

Pour traiter ce cas, on introduit un coefficient de variabilité $z \geq 1$ pour chaque séquence répétitive, za et zb respectivement pour les séquences RSFa et RSFb. Les coefficients za et zb sont fixes et représentent le ralentissement maximal subi par les intervalles T et R dans les deux séquences. En supposant que les notations utilisées dans les relations précédentes représentent les valeurs minimales des intervalles, chacune des valeurs T et R peut ainsi prendre deux valeurs, T ou zT et R ou zR. Les besoins d'exécution D sont fixes, car ils dépendent seulement de l'horloge du système.

Dans les relations précédentes, lorsqu'un intervalle sert à trouver un créneau pour exécuter une opération, on garde sa valeur minorée T ou R. Lorsque l'intervalle sert à vérifier le respect d'une échéance, on prend sa valeur majorée zT ou zR. On obtient alors le pseudo-code suivant.

*Pour chaque i entre 0 et Na-1 faire :*
  *Pour chaque j entre 0 et Nb-1 faire :*
    *[A.1]*
    *si $Da_i \leq Tb_{j+1}$ alors continuer en [B.1]*
    *[A.2]*
    *$q_l := (Da_i - Tb_{j+1})/(Tb_j + Rb_j)$*

*si $Da_i \le Tb_{j+1} + Rb_{j+1} + Tb_{j+2}$*

*et $min[\ q_l(zb \bullet (Tb_j + Rb_j) + (zb{-}1)Db_j),\ Da_i\ ] + Db_{j+1} \le Ta_i$*

  *alors continuer en [B.1]*

*[A.3]*

*si $Da_i \le Tb_{j+2} + Rb_{j+2} + Tb_{j+3}$*

*et $Db_{j+1} + min[\ q_l(zb \bullet (Tb_j + Rb_j) + (zb{-}1)Db_j),\ Da_i\ ]$*

*$+ Db_{j+2} + min[\ zb \bullet (Tb_{j+1} + Rb_{j+1}) + (zb{-}1)Db_{j+1},\ Da_i\ ] \le Ta_i$*

  *alors continuer en [B.1]*

*terminer la boucle avec échec*


*[B.1]*

*si $Da_i \le Rb_j + Tb_{j+1}$*

*et $Db_j \le Ta_i$*

  *alors continuer en [C.2]*

*[B.1.1]*

*$q_l := (Da_i - Rb_j - Tb_{j+1})/Tb_j$*

*si $q_l > 1$ ou $Tb_j = 0$ alors $q_l := 1$ et continuer en [B.2]*

*$T_l := Ta_{i-1} - (1{-}q_l)Tb_j + Ra_{i-1}$*

*si $Db_{j-1} \le T_l + min[\ Tb_{j-1} + Db_{j-1} + Rb_{j-1} - T_l - Da_{i-1},\ Ra_{i-2}\ ]$*

  *alors continuer en [C.1]*

*[B.1.2]*

*si $Db_{j-1} + zb \bullet Rb_{j-1} \le T_l$*

*et $Da_{i-1} \le Tb_{j-2} + Rb_{j-2} + Tb_{j-1}$*

*et $zb \bullet (Tb_{j-2} + Db_{j-2} + Rb_{j-2} + Tb_{j-1} + Db_{j-1} + Rb_{j-1}) \le Ra_{i-2} + T_l + Da_{i-1}$*

  *alors continuer en [C.1]*

*[B.2]*

*si $Da_i \le Tb_{j+1} + Rb_{j+1} + Tb_{j+2}$*

*et $Db_j + min[\ q_l(zb \bullet Tb_j + (zb{-}1)Db_j) + zb \bullet Rb_j,\ Da_i\ ]$*

*$+ Db_{j+1} \le Ta_i$*

  *alors continuer en [C.1]*

*[B.3]*

*si $Da_i \le Tb_{j+2} + Rb_{j+2} + Tb_{j+3}$*

*et $Db_j + min[\ q_l(zb \bullet Tb_j + (zb{-}1)Db_j) + zb \bullet Rb_j,\ Da_i\ ]$*

*$+ Db_{j+1} + min[\ zb \bullet (Tb_{j+1} + Rb_{j+1}) + (zb{-}1)Db_{j+1},\ Da_i\ ]$*

*$+ Db_{j+2} \le Ta_i$*

  *alors continuer en [C.1]*

*terminer la boucle avec échec*


*[C.1]*

*si $Db_j \le Ta_i$*

  *alors continuer en [D]*

*[C.2]*

$$si\ Db_j \le Ta_i + min[\ Tb_j\text{-}Da_i,\ Ra_i,\ Ra_{i-1}\ ]$$
$$alors\ continuer\ en\ \textbf{[D]}$$
$$terminer\ la\ boucle\ avec\ échec$$
$$\textbf{[D]}\ Passer\ au\ j\ suivant$$
$$Passer\ au\ i\ suivant$$

Pour le cas 3) du procédé d'ordonnancement décrit plus haut, la marge de temps à considérer est la valeur minimale, à savoir T et non zT.

Les principes qu'on vient de présenter ont été décrits en relation avec deux tâches à exécuter en temps partagé, mais ils s'appliquent à un nombre de tâches quelconque. En effet, le procédé décrit permet en pratique de composer un plan de séquencement unique pour deux tâches compatibles. Le plan de séquencement ainsi obtenu peut être composé de nouveau, en utilisant les mêmes techniques, avec un plan de séquencement d'une troisième tâche compatible, et ainsi de suite.

**Revendications**

1.  Procédé d'exécution de deux tâches en temps partagé, comprenant les étapes suivantes :

    • décomposer hors-ligne chaque tâche en une séquence répétitive de trames successives (RSF) dans une base de temps associée à la tâche, où chaque trame (F) est associée à une opération atomique ayant un besoin d'exécution (D), et définit une date de début à partir de laquelle l'opération peut commencer et une date d'échéance (E) à laquelle l'opération doit être terminée, d'où il résulte que chaque trame définit une marge de temps (T) dans laquelle l'opération peut démarrer ;
    • vérifier pour chaque trame ($Fa_i$) d'une première des séquences répétitives (RSFa) que l'opération correspondante ($Da_i$) peut être exécutée entre deux opérations successives quelconques d'un groupe de trames ($Fb_j$, $Fb_{j+1}$) de la deuxième séquence répétitive (RSFb), chevauchant la trame ($Fa_i$) de la première séquence répétitive, tout en respectant les dates de début et les échéances des opérations ; et
    • si la vérification est satisfaite, autoriser l'exécution des deux tâches et ordonnancer les opérations des deux tâches selon les cas suivants évalués à chaque date clé, où une date clé survient à chaque échéance, chaque date de début, et chaque fin d'exécution d'opération :

        - si deux opérations ($Da_3$, $Db_2$) peuvent démarrer, exécuter celle ($Da_3$) qui a l'échéance la plus courte ; et
        - si une seule opération peut démarrer, l'exécuter seulement si son besoin d'exécution est inférieur à la durée restant jusqu'à la date de début de la prochaine trame de l'autre séquence, augmentée de la marge de temps (T) associée à ladite prochaine trame de l'autre séquence.

2.  Procédé selon la revendication 1, dans lequel chaque trame (F) comprend en outre un intervalle de temps de réserve (R) pouvant être nul, situé après l'échéance (E) de la trame ou avant la date de début de la trame, les intervalles de temps de réserve de l'une quelconque des séquences répétitives pouvant être pris pour exécuter une opération de l'autre séquence répétitive.

3.  Procédé selon la revendication 2, dans lequel l'étape de vérification comprend les étapes suivantes :

    • pour chaque trame $Fa_i$ de la première séquence répétitive, évaluer les conditions suivantes pour chaque trame $Fb_j$ de la deuxième séquence répétitive :

$$[A.1]\ Da_i \le Tb_{j+1}$$

$$[B.1]\ Da_i \le Rb_j + Tb_{j+1}$$
$$et\ Db_j \le Ta_i,\ et$$

$$[C.1] \ Db_j \leq Ta_i,$$

où D, T et R sont le besoin d'exécution, la marge de temps, et le temps de réserve, indexés par un identifiant de séquence répétitive et le numéro de trame dans la séquence ;
• répéter les évaluations des conditions en intervertissant les trames $Fa_i$ et $Fb_j$ ;
• autoriser l'exécution des tâches si les trois conditions [A.1], [B.1] et [C.1] sont satisfaites pour tout couple (i, j).

4. Procédé selon la revendication 3, dans lequel l'étape de vérification comprend les étapes suivantes :

• si la condition [A.1] est fausse, évaluer la condition suivante :

$$[A.2] \ Da_i \leq Tb_{j+1} + Rb_{j+1} + Tb_{j+2}$$
$$\text{et } Da_i + Db_{j+1} \leq Ta_i + Tb_{j+1}$$

• si la condition [B.1] est fausse, évaluer la condition suivante :

$$[B.2] \ Da_i \leq Tb_{j+1} + Rb_{j+1} + Tb_{j+2}$$
$$\text{et } Db_j + Da_i + Db_{j+1} \leq Ta_i + Tb_{j+1}$$

• si la condition [C.1] est fausse, évaluer la condition suivante :

$$[C.2] \ Db_j \leq Ta_i + \min[\ Tb_j - Da_i, Ra_i, Ra_{i-1}\ ]$$

• autoriser l'exécution des tâches si les conditions [A.1] ou [A.2], et [B.1] ou [B.2], et [C.1] ou [C.2] sont satisfaites pour tout couple (i, j).

5. Procédé selon la revendication 3, dans lequel les bases de temps déterminant les durées des trames sont variables de sorte que les marges de temps T et les réserves de temps R varient d'un facteur 1 à za pour les trames Fa et de 1 à zb pour les trames Fb, l'étape de vérification comprenant alors les étapes suivantes :

• si la condition [A.1] est fausse, évaluer la condition suivante :

$$[A.2] \ Da_i \leq Tb_{j+1} + Rb_{j+1} + Tb_{j+2}$$
$$\text{et } \min[\ q_l(zb \cdot (Tb_j + Rb_j) + (zb-1)Db_j), Da_i\ ] + Db_{j+1} \leq Ta_i$$

$$\text{où } q_l = (Da_i - Tb_{j+1})/(Tb_j + Rb_j)\ ;$$

• si la condition [B.1] est fausse, évaluer la condition suivante :

$$[B.2] \ Da_i \leq Tb_{j+1} + Rb_{j+1} + Tb_{j+2}$$
$$\text{et } Db_j + \min[\ q_l(zb \cdot Tb_j + (zb-1)Db_j) + zb \cdot Rb_j, Da_i\ ] + Db_{j+1} \leq Ta_i$$

$$\text{où } q_l = (Da_i - Rb_j - Tb_{j+1})/Tb_j\ ;$$

• si la condition [C.1] est fausse, évaluer la condition suivante :

$$[C.2] \ Db_j \leq Ta_i + \min[\ Tb_j - Da_i, Ra_i, Ra_{i-1}\ ]$$

• autoriser l'exécution des tâches si les conditions [A.1] ou [A.2], et [B.1] ou [B.2], et [C.1] ou [C.2] sont satisfaites pour tout couple (i, j).

6. Procédé selon la revendication 5, dans lequel l'étape de vérification comprend les étapes suivantes :

• si la condition [B.1] est fausse, évaluer avant la condition [B.2] la condition suivante :

$$[B.1.1] \ Da_i \leq Tb_j + Rb_j + Tb_{j+1}$$
$$et \ Db_{j-1} \leq T_1 + min[\ Tb_{j-1} + Db_{j-1} + Rb_{j-1} - T_1 - Da_{i-1}, \ Ra_{i-2}\ ]$$

$$où \ q_l = (Da_i - Rb_j - Tb_{j+1})/Tb_j \ et \ T_1 = Ta_{i-1} - (1-q_l)Tb_j + Ra_{i-1}$$

• autoriser l'exécution des tâches si les conditions [A.1] ou [A.2], et [B.1] ou [B.1.1], et [C.1] ou [C.2] sont satisfaites pour tout couple (i, j).


**Patentansprüche**

1. Verfahren zum Ausführen von zwei Aufgaben in zeitlicher Aufteilung, umfassend die folgenden Schritte:

• Aufteilen jeder Aufgabe offline in eine sich wiederholende Folge aufeinanderfolgender Frames (RSF) in einer der Aufgabe zugeordneten Zeitbasis, wobei jeder Frame (F) einer unteilbaren Operation zugeordnet ist, der ausgeführt werden muss (D), und ein Startdatum definiert, ab dem die Operation starten kann, und ein Fälligkeitsdatum (E) definiert, an dem die Operation abgeschlossen sein muss, woraus folgt, dass jeder Frame eine Zeitspanne (T) definiert, in der die Operation starten kann;
• Verifizieren bei jedem Frame ($Fa_i$) einer ersten der sich wiederholenden Sequenzen (RSFa), ob die entsprechende Operation ($Da_i$) zwischen zwei aufeinanderfolgenden Operationen einer Gruppe von Frames ($Fb_j$, $Fb_{j+1}$) der zweiten sich wiederholenden Sequenz (RSFb), die den Frame ($Fa_i$) der ersten sich wiederholenden Sequenz unter Berücksichtigung der Startdaten und der Fristen der Operationen überlappt, ausgeführt werden kann; und
• wenn die Verifizierung erfüllt ist, Autorisieren der Ausführung der beiden Aufgaben und Planen der Operationen der beiden Aufgaben gemäß den folgenden Fällen, die an jedem Stichtag bewertet werden, wobei an jedem Stichtag, jedem Startdatum und jedem Ende der Ausführung der Operation ein Stichtag liegt:

- wenn zwei Operationen ($Da_3$, $Db_2$) gestartet werden können, Ausführen derjenigen ($Da_3$) mit der kürzesten Frist, und
- wenn eine einzelne Operation gestartet werden kann, Ausführen nur dann, wenn ihre Ausführungsanforderung geringer ist als die verbleibende Zeit bis zum Startdatum des nächsten Frames der anderen Sequenz, erhöht um die zugehörige Zeitspanne (T) zum nächsten Frame der anderen Sequenz.

2. Verfahren nach Anspruch 1, wobei jeder Frame (F) ferner ein Reservezeitintervall (R) umfasst, das Null sein kann, das nach dem Ablauf (E) des Frames oder vor dem Startdatum des Frames liegt, wobei die Reservezeitintervalle einer der sich wiederholenden Sequenzen genommen werden können, um eine Operation der anderen sich wiederholenden Sequenz durchzuführen.

3. Verfahren nach Anspruch 2, wobei der Verifizierungsschritt die folgenden Schritte umfasst:

• Bewerten, für jeden Frame $Fa_i$ der ersten Wiederholungssequenz, der folgenden Bedingungen für jeden Frame $Fb_j$ der zweiten Wiederholungssequenz:

$$[A.1] \ Da_i \leq Tb_{j+1}$$

$$[B.1] \ Da_i \leq Rb_j + Tb_{j+1}$$
$$und \ Db_j \leq Ta_i \ und$$

$$[C.1] Db_j \le Ta_i,$$

wobei D, T und R die Ausführungsanforderung, die Zeitspanne und die Reservezeit sind, die durch eine sich wiederholende Sequenzkennung und die Framenummer in der Sequenz indiziert sind;
• Wiederholen der Bewertungen der Bedingungen, indem die Frames $Fa_i$ und $Fb_j$ invertiert werden;
• Autorisieren der Ausführung der Aufgaben, wenn die drei Bedingungen [A.1], [B.1] und [C.1] für jedes Paar (i, j) erfüllt sind.

4.  Verfahren nach Anspruch 3, wobei der Verifizierungsschritt die folgenden Schritte umfasst:

• wenn die Bedingung [A.1] falsch ist, Bewerten der folgenden Bedingung:

$$[A.2]\ Da_i \le Tb_{j+1} + Rb_{j+1} + Tb_{j+2}$$

$$\text{und } Da_i + Db_{j+1} \le Ta_i + Tb_{j+1}$$

• wenn die Bedingung [B.1] falsch ist, Bewerten der folgenden Bedingung:

$$[B.2]\ Da_i \le Tb_{j+1} + Rb_{j+1} + Tb_{j+2}$$

$$\text{und } Db_j + Da_i + Db_{j+1} \le Ta_i + Tb_{j+1}$$

• wenn die Bedingung [C.1] falsch ist, Bewerten der folgenden Bedingung:

$$[C.2]\ Db_j \le Ta_i + \min[\ Tb_j - Da_i,\ Ra_i,\ Ra_{i-1}\ ]$$

• Autorisieren der Ausführung der Aufgaben, wenn die Bedingungen [A.1] oder [A.2] und [B.1] oder [B.2] und [C.1] oder [C.2] für jedes Paar (i, j) erfüllt sind.

5.  Verfahren nach Anspruch 3, wobei die Zeitbasen, die die Dauer der Frames bestimmen, variabel sind, derart, dass die Zeitspannen T und die Zeitreserven R für die Frames Fa um einen Faktor von 1 bis za und für die Frames Fb von 1 bis zb variieren, wobei der Verifizierungsschritt dann die folgenden Schritte umfasst:

• wenn die Bedingung [A.1] falsch ist, Bewerten der folgenden Bedingung:

$$[A.2]\ Da_i \le Tb_{j+1} + Rb_{j+1} + Tb_{j+2}$$

$$\text{und } \min[\ q_1(zb \cdot (Tb_j + Rb_j) + (zb-1)Db_j),\ Da_i\ ] + Db_{j+1} \le Ta_i$$

wobei $q_1 = (Da_i - Tb_{j+1})/(Tb_j + Rb_j)$;
• wenn die Bedingung [B.1] falsch ist, Bewerten der folgenden Bedingung:

$$[B.2]\ Da_i \le Tb_{j+1} + Rb_{j+1} + Tb_{j+2}$$

$$\text{und } Db_j + \min[\ q_1(zb \cdot Tb_j + (zb-1)Db_j) + zb \cdot Rb_j,\ Da_i\ ] + Db_{j+i} \le Ta_i$$

$$\text{wobei } q_1 = (Da_i - Rb_j - Tb_{j+1})/Tb_j;$$

• wenn die Bedingung [C.1] falsch ist, Bewerten der folgenden Bedingung:

$$[C.2]\ Db_j \le Ta_i + \min[\ Tb_j - Da_i,\ Ra_i,\ Ra_{i-1}\ ]$$

• Autorisieren der Ausführung der Aufgaben, wenn die Bedingungen [A.1] oder [A.2] und [B.1] oder [B.2] und [C.1] oder [C.2] für jedes Paar (i, j) erfüllt sind.

**6.** Verfahren nach Anspruch 5, wobei der Verifizierungsschritt die folgenden Schritte umfasst:

• wenn die Bedingung [B.1] falsch ist, Bewerten der folgenden Bedingung vor der Bedingung [B.2]:

$$[B.1.1] \; Da_i \leq Tb_j + Rb_j + Tb_{j+1}$$

$$\text{und } Db_{j-1} \leq T_1 + \min[Tb_{j-1} + Db_{j-1} + Rb_{j-1} - T_1 - Da_{i-1}, Ra_{i-2}]$$

$$\text{wobei } q_1 = (Da_i - Rb_j - Tb_{j+1})/Tb_j \; et \; T_1 = Ta_{i-1} - (1-q_1)Tb_j + Ra_{i-1}$$

• Autorisieren der Ausführung der Aufgaben, wenn die Bedingungen [A.1] oder [A.2] und [B.1] oder [B.1.1] und [C.1] oder [C.2] für jedes Paar (i, j) erfüllt sind.

**Claims**

**1.** A method for executing two tasks in timesharing, comprising the steps of:

• decomposing offline each task in a repetitive sequence of consecutive frames (RSF) in a time base associated with the task, wherein each frame (F) is associated with an atomic operation having an execution need (D), and defines a start date from which the operation may start and a deadline (E) by which the operation must end, whereby each frame defines a time margin (T) in which the operation may start;
• verifying for each frame ($Fa_i$) of a first of the repetitive sequences (RSFa) that the corresponding operation ($Da_i$) can be performed between any two successive operations of a group of frames ($Fb_j$, $Fb_{j+1}$) of the second repetitive sequence (RSFb), overlapping the frame ($Fa_i$) of the first repetitive sequence, while respecting the start dates and deadlines of the operations; and
• if the verification is satisfied, allowing the execution of the two tasks and scheduling the operations of the two tasks according to the following cases, evaluated at each key date, wherein a key date occurs at each deadline, each start date, and each end of operation:

- if two operations ($Da_3$, $Db_2$) can start, executing the operation ($Da_3$) having the shorter deadline; and
- if a single operation can start, executing it only if its execution need is less than the time remaining until the start date of the next frame of the other sequence, plus the margin of time (T) associated with said next frame of the other sequence.

**2.** The method of claim 1, wherein each frame (F) further comprises a reserve time interval (R) that may be zero, located after the deadline (E) of the frame or before the start date of the frame, wherein the reserve time intervals of any one of the repetitive sequences may be used to execute an operation of the other repetitive sequence.

**3.** The method of claim 2, wherein the verification step comprises the following steps:

• for each frame $Fa_i$ of the first repetitive sequence, evaluating the following conditions for each frame $Fb_j$ of the second repetitive sequence:

$$[A.1] \; Da_i \leq Tb_{j+1}$$

$$[B.1] \; Da_i \leq Rb_j + Tb_{j+1}$$

$$\text{and } Db_j \leq Ta_i, \text{ and}$$

$$[C.1] \; Db_j \leq Ta_i,$$

where D, T and R are the execution need, the time margin, and reserve time, indexed by a repetitive sequence identifier and the frame number in the sequence;
• repeating the condition evaluations with the frames $Fa_i$ and $Fb_j$ exchanged;

• authorizing execution of the tasks if the three conditions [A.1], [B.1] and [C.1] are satisfied for any pair (i, j).

4. The method of claim 3, wherein the verification step comprises the following steps:

   • if the condition [A.1] is false, evaluating the following condition:

$$[A.2] \; Da_i \leq Tb_{j+1} + Rb_{j+1} + Tb_{j+2}$$
$$\text{and } Da_i + Db_{j+1} \leq Ta_i + Tb_{j+1}$$

   • if the condition [B.1] is false, evaluating the following condition:

$$[B.2] \; Da_i \leq Tb_{j+1} + Rb_{j+1} + Tb_{j+2}$$
$$\text{and } Db_j + Da_i + Db_{j+1} \leq Ta_i + Tb_{j+1}$$

   • if the condition [C.1] is false, evaluating the following condition:

$$[C.2] \; Db_j \leq Ta_i + \min[\; Tb_j\text{-}Da_i, \; Ra_i, \; Ra_{i\text{-}1} \;]$$

   • authorizing execution of the tasks if the conditions [A.1] or [A.2] and [B.1] or [B.2] and [C.1] or [C.2] are met for each pair (i, j).

5. The method of claim 3, wherein the time bases determining the durations of the frames are variable so that the time margins T and the reserve times R vary by a factor 1 to za for the frames Fa and a factor 1 to zb for the frames Fb, the verification step further comprising the steps of:

   • if the condition [A.1] is false, evaluating the following condition:

$$[A.2] \; Da_i \leq Tb_{j+1} + Rb_{j+1} + Tb_{j+2}$$
$$\text{and } \min[\; ql(zb\bullet(Tb_j + Rb_j) + (zb-1)Db_j), \; Da_i \;] + Db_{j+1} \leq Ta_i$$
$$\text{where } ql = (Da_i - Tb_{j+1})/(Tb_j + Rb_j) \; ;$$

   • if the condition [B.1] is false, evaluating the following condition:

$$[B.2] \; Da_i \leq Tb_{j+1} + Rb_{j+1} + Tb_{j+2}$$
$$\text{and } Db_j + \min[\; ql(zb\bullet Tb_j + (zb-1)Db_j) + zb\bullet Rb_j, \; Da_i \;] + Db_{j+1} \leq Ta_i$$
$$\text{where } ql = (Da_i - Rb_j - Tb_{j+1})/Tb_j \; ;$$

   • if the condition [C.1] is false, evaluating the following condition:

$$[C.2] \; Db_j \leq Ta_i + \min[\; Tb_j\text{-}Da_i, \; Ra_i, \; Ra_{i\text{-}1} \;]$$

   • authorizing execution of the tasks if the conditions [A.1] or [A.2] and [B.1] or [B.2] and [C.1] or [C.2] are met for each pair (i, j).

6. The method of claim 5, wherein the verification step comprises the following steps:

• if the condition [B.1] is false, evaluating the following condition before the condition [B.2]:

$$[B.1.1]\ Da_i \leq Tb_j + Rb_j + Tb_{j+1}$$

$$\text{and } Db_{j-1} \leq Tl + \min[\ Tb_{j-1} + Db_{j-1} + Rb_{j-1} - Tl - Da_{i-1},\ Ra_{i-2}\ ]$$

$$\text{where } ql = (Da_i - Rb_j - Tb_{j+1})/Tb_j \text{ and } Tl = Ta_{i-1} - (1-ql)Tb_j + Ra_{i-1}$$

• authorizing execution of the tasks if the conditions [A.1] or [A.2] and [B.1] or [B.1.1] and [C.1] or [C.2] are met for each pair (i, j).

**Fig 1**

**Fig 2**

**Fig 3A**

**Fig 3B**

**Fig 3C**

**Fig 4A**

RSFa

$Da_i$

$Ea_i$

RSFb

$Db_j$ $Eb_j$ $Db_{j+1}$

$qTb_j$ $Tb_{j+1}$ $Eb_{j+1}$

**Fig 4B**

RSFa

$Da_i$

$Ea_i$

RSFb

$Db_j$ $Db_{j+1}$ $Eb_{j+1}$ $Db_{j+2}$

$qTb_j$ $Tb_{j+1}$ $Tb_{j+2}$

**Fig 4C**

RSFa

$Da_i$

$Ea_i$

RSFb

$Db_j$ $Db_{j+1}$

$q_iTb_j$ $Tb_{j+1}$

**Fig 5A**

RSFa

$Da_i$

$Ea_i$

RSFb

$Db_j$ $Eb_j$ $Db_{j+1}$

$qTb_j$ $Tb_{j+1}$ $Eb_{j+1}$

**Fig 5B**

RSFa

$Da_i$

$Ea_i$

RSFb

$Db_j$ $Db_{j+1}$ $Eb_{j+1}$ $Db_{j+2}$

$qTb_j$ $Tb_{j+1}$ $Tb_{j+2}$

**Fig 6**

RSFa

$Da_{i-1}$   $Da_i$   $Ea_i$   $Ta_i$

RSFb

$Db_j$   $Eb_j$

**Fig 7**

RSFa

$T_l$   $Da_{i-1}$   $Da_i$   $Ta_i$

RSFb

$Db_{j-1}$   $Db_j$   $Db_{j+1}$   $Tb_{j-1}$   $(1-q_l)Tb_j$   $q_lTb_j$   $Tb_{j+1}$

**Fig 8**

RSFa

$Da_{i-1}$   $Ra_{i-1}$   $Da_i$   $Ta_i$   $Ra_i$   $Da_{i+1}$

RSFb

$kRa_{i-1}$   $Db_j$   $Tb_j$

## RÉFÉRENCES CITÉES DANS LA DESCRIPTION

**Documents brevets cités dans la description**

- WO 2006050967 A
- US 20100199280 A
- FR 2949876

**Littérature non-brevet citée dans la description**

- **C. AUSSAGUÈS ; V. DAVID.** A method and a technique to model and ensure timeliness in safety critical real-time systems. *Fourth IEEE International Conférence on Engineering of Complex Computer Systems,* 1998
- **JIA XU.** *SCHEDULING PROCESSES WITH RELEASE TIMES, DEADLINES, PRECEDENCE, AND EXCLUSION RELATIONS*
- **C. LIU ; J. LAYLAND.** Scheduling algorithms for multiprogramming in a hard real-time environment. *Journal of the ACM,* vol. 20 (1), 46-61
- Foundations of Real-Time Computing: Scheduling and Resource Management. 1991